# EUROPÄISCHE PATENTSCHRIFT

(11) **EP 0 318 669 B1**
(45) Veröffentlichungstag und Bekanntmachung des Hinweises auf die Patenterteilung: **12.01.1994**
(21) Anmeldenummer: 88116341.4
(22) Anmeldetag: 03.10.1988
(51) Int. Cl.: F16D 3/72

(54) **Federscheibenkupplung**
Flexible coupling with spring discs
Accouplement à rondelles élastiques

(30) Priorität: 01.12.1987 DE 3740707; 09.09.1988 EP 88114805
(43) Veröffentlichungstag der Anmeldung: 07.06.1989
(73) Patentinhaber: VMA-NC Mess- und Antriebstechnik GmbH, D-63814 Kleinostheim (DE)
(72) Erfinder: Seckendorf, Monika, D-8752 Mainaschaff (DE); Hasenstab, Gabi, D-8752 Mainaschaff (DE)
(74) Vertreter: Jaeger, Klaus, Dr.

(56) Entgegenhaltungen:
- EP-A- 0 215 725
- EP-A- 0 271 355
- DE-A- 1 775 056
- FR-A- 808 205
- FR-A- 2 271 452
- US-A- 1 558 576

## Beschreibung

Die Erfindung betrifft eine Federscheibenkupplung aus einem zylindrischen Körper, der an seinen beiden axialen Enden jeweils ein Endteil und zwischen den beiden Endteilen quer zur Längsachse des Körpers angeordnete und in axial beabstandeten Querschnittsebenen liegende Schlitze besitzt und der zumindest im geschlitzten Bereich eine zu seiner Längsachse koaxiale Längsbohrung aufweist, in welche sich die Schlitze erstrecken, wobei mindestens zwei Schlitze in einer Querschnittsebene angeordnet sind, wobei zwischen den Querschnittsebenen Federscheiben ausgebildet sind, die miteinander bzw. mit den Endteilen über eine der Zahl der Schlitze pro Querschnittsebene entsprechende Anzahl von radial verlaufenden, in den jeweiligen Querschnittsebenen liegenden Stegen verbunden sind, wobei die Winkel, die zwischen den radial verlaufenden Mittellinien benachbarter Stege einer Querschnittsebene eingeschlossen sind, gleich sind, und wobei die Breite der Stege beginnend bei der Längsbohrung bis zur Mantelfläche des Körpers zunimmt.

Die erfindungsgemäße Federscheibenkupplung ist ein flexibles Kupplungsglied und dient zum Übertragen eines Drehmomentes zwischen einem Wellenpaar, wobei eventuell vorhandene Ausrichtungsfehler der Wellen ausgeglichen werden.

Man kennt im wesentlichen zwei verschiedene Bauformen von flexiblen Federscheibenkupplungen. Die eine Bauform besteht aus mehreren Einzelelementen, die mittels geeigneter Bauteile miteinander verbunden werden. Dazu werden einzelne Federscheiben mit Schrauben oder Nieten gegen die Nabenteile verspannt.

Nachteil dieser bekannten Federscheibenkupplung ist die begrenzte Anzahl an Federscheiben, die daher auch nur einen geringen Versatzausgleich zulassen. Zudem besteht die Gefahr, daß sich die Schraub- oder Nietverbindungen lösen, so daß die Wellenverbindung Spiel erhält und ggf. ihre Funktion nicht mehr erfüllen kann.

Ein Vertreter der zweiten Bauform für Federscheibenkupplungen ist in der DE-OS 24 33 282 beschrieben. Das dort erläuterte flexible Kupplungsglied besteht aus einem festen zylindrischen Körper und ist mit Schlitzen versehen, die quer zur Längsachse des zylindrischen Körpers angeordnet sind und über die Mitte bzw. die Längsachse des zylindrischen Körpers hinausgehen.

Die zwischen den Schlitzen des bekannten flexiblen Kupplungsgliedes angeordneten Scheiben sind über Stege miteinander verbunden, die an der Peripherie des zylindrischen Körpers angeordnet sind.

Beim Drehen dieses bekannten Kupplungsgliedes tritt aufgrund des asymmetrischen Aufbaus der Federscheibenpakete ein Drehmoment auf, dessen Wirkachse in dem verbleibenden exzentrischen Verbindungssteg der Federscheibenpakete liegt. Dies führt zu einer Relativbewegung der Federscheiben gegeneinander und somit zu einer Ungenauigkeit der kraftübertragenden Bewegung.

Aus der am 13. November 1952 offengelegten DE-AN S 22850 ist eine Wellenkupplung bekannt, die aus einem Hohlzylinder mit radialen, abwechselnd gegeneinander versetzten Einschnitten besteht, wobei die Einschnitte auf beiden Seiten des Hohlzylinders vorhanden sind.

Bei dieser bekannten Wellenkupplung sind zwei Einschnitte pro Querschnittsebene vorhanden; benachbarte Federscheibenelemente sind durch zwei Stege pro Querschnittsebene miteinander verbunden. Die Stege erstrecken sich vom Innenraum des Hohlzylinders radial nach außen; ihre Querschnittsbreite ist von dem Innenraum des Hohlzylinders bis zu dessen Mantelfläche konstant und ändert sich somit nicht.

Alle die bisher bekannten Kupplungen der hier in Rede stehenden Art sind mit dem Nachteil behaftet, daß sie nur geringe Drehmomente übertragen können. Mit anderen Worten, die Drehfestigkeit der bekannten Kupplungen ist nicht ausreichend. Diese bekannten Kupplungen brechen daher häufig, insbesondere wenn sie auf Gebieten eingesetzt werden, in denen die mit Hilfe dieser Kupplungen zu verbindenden Wellen ihre Drehrichtung häufig ändern und von einer Drehrichtung stark abgebremst und in die andere Drehrichtung beschleunigt werden usw.

Aus der FR-A-2 271 452 ist eine Kupplung bekannt, die einen hohlzylindrischen Körper aufweist, der in mehreren quer zur Längsachse des Körpers angeordneten und axial beabstandeten Querschnittsebenen mehrere Schlitze besitzt. Dadurch werden zwischen den die Schlitze aufweisenden Querschnittsebenen Federscheiben ausgebildet. In der die Schlitze aufweisenden Querschnittsebenen befinden sich radial verlaufende Stege, über die axial benachbarte Federscheiben bzw. Federscheibenringe miteinander verbunden sind. Die Querschnittsbreite der Stege dieser bekannten Kupplung bleibt in ihrem radialen Verlauf konstant. Die Seitenkonturlinie dieser Stege verläuft somit gerade.

Eine ähnliche Kupplung ist aus der EP-A-0 215 725 bekannt. Bei einer Ausführungsform der dort beschriebenen Kupplung nimmt die Querschnittsbreite der Stege beginnend von der zentralen Längsbohrung zur Außenmantelfläche zu. Die Seitenkonturlinie dieser Stege verläuft gerade, so daß die Querschnittsform der Stege in etwa der eines Trapez entspricht.

Aufgabe der vorliegenden Erfindung ist es, eine Federscheibenkupplung bereitzustellen, die bei möglichst kompakter Bauweise in der Lage ist, nicht nur hohe Drehmomente spielfrei zu übertragen und dabei axiale, angulare und laterale Achsversätze auszugleichen, sondern ihre Funktionstüchtigkeit auch bei schnell stattfindenden Drehlastwechseln behält.

Gelöst wird diese Aufgabe dadurch, daß bei der erfindungsgemäßen Federscheibenkupplung die Querschnittsform der Stege in etwa eine Pilzform darstellt, die zur radial verlaufenden Mittellinie der Stege symmetrisch ist und deren seitliche Begrenzungslinie auf einer Kreisbahn liegt.

Der zylindrische Körper der erfindungsgemäßen Federscheibenkupplung kann zumindest im Bereich der Schlitze und der dazwischen liegenden Federscheiben als Hohlzylinder angesehen werden. In diesem Bereich besitzt der Körper somit eine koaxial zur Längsachse davon verlaufende Längsbohrung. Diese Längsbohrung durchsetzt zweckmäßigerweise auch die beiden axialen Endteile der erfindungsgemäßen Federscheibenkupplung, hat dort jedoch zweckmäßigerweise einen geringeren Durchmesser.

Zwischen den beiden Endteilen sind in axial beabstandeten Querschnittsebenen Schlitze angeordnet. Zwischen zwei benachbarten Querschnittsebenen, in denen die Schlitze angeordnet sind, befindet sich eine quer zur Längsachse angeordnete Federscheibe. Jede Federscheibe ist mit der benachbarten Federscheibe bzw. dem Endteil über radial verlaufende Stege verbunden. Die Zahl der Stege in einer Querschnittsebene entspricht der Zahl der Schlitze in dieser Querschnittsebene. Bei einer Ausführungsform der erfindungsgemäßen Federscheibenkupplung besitzt letztere in einer Querschnittsebene beispielsweise drei Schlitze; dann sind auch drei Stege in derselben Querschnittsebene vorhanden.

Mit anderen Worten, die von den Schlitzen freigelegten Querschnittsflächen (bezogen auf die Querschnittsfläche des zylindrischen Körpers) ergeben zusammen mit den Querschnittsflächen der Stege in dieser Querschnittsebene und der Querschnittsfläche der Längsbohrung eine volle Kreisfläche des zylindrischen Körpers.

Eine Ausführungsform der erfindungsgemäßen Federscheibenkupplung zeichnet sich dadurch aus, daß mindestens drei Schlitze und somit auch drei Stege in einer Querschnittsebene angeordnet sind. Die zwischen den radial verlaufenden Mittellinien benachbarter Stege dieser Querschnittsebene eingeschlossenen Winkel sind dann gleich. So beträt dieser Winkel (bei drei Schlitzen und drei Stegen pro Querschnittsebene) 120°.

Vorzugsweise ist die pilzförmige Querschnittsform der Stege so gewählt, daß die Breite der Stege beginnend bei der Längsbohrung des zylindrischen Körpers bis zur Mantellinie kontinuierlich zunimmt, wobei der Fuß des "Pilzes" zur Längsbohrung zeigt und die Mantelfläche des Steges die "Pilzhaube" bildet.

Wählt man eine derartige Stegform, dann ist es ausreichend, nur zwei Stege pro Querschnittsebene vorzusehen, um eine erhöhte Drehsteifigkeit im Vergleich mit den bisher bekannten Federscheibenkupplungen sicherzustellen, wobei sich dieser Vergleich wieder darauf bezieht, daß die Summe der Querschnittsfläche der Stege einer Querschnittsebene der miteinander verglichenen Federscheibenkupplungen die gleiche ist

Mit den so geformten Stegen kann man das sog. "polare Widerstandsmoment" der erfindungsgemäßen Federscheibenkupplung überraschenderweise verstärken. Dies ist insbesondere für solche Kupplungen von Bedeutung, die stark beschleunigt, abgebremst und wieder stark in die gegensinnige Drehrichtung beschleunigt werden.

Bei der erfindungsgemäßen Ausführungsform mit nur zwei Schlitzen und Stegen pro Querschnittsebene, liegen die Mittellinien der Stege im übrigen auf dem Durchmesser des zylindrischen Körpers. Sie bilden somit einen Winkel von 180° zueinander. Die Schlitze erstrecken sich dabei von außen nach innen, jedoch nicht über die Längsachse des Körpers, d.h. die Mittelachse hinaus, und reichen bis in die Längsbohrung hinein.

Die Stege aller Ausführungsformen der erfindungsgemäßen Federscheibenkupplung erstrecken sich radial von der Längsbohrung des zylindrischen Körpers nach außen bis zu dessen Mantelfläche. Die Mittellinie der Stege liegt auf dem Radius des kreisförmigen Querschnitts des zylindrischen Körpers. Die Stege sind bezüglich der durch diese Mittellinie verlaufenden Längsebene des zylindrischen Körpers symmetrisch.

Nach einer bevorzugten Ausführungsform besitzen alle Schlitze einer Querschnittsebene die gleiche geometrische Form. Demzufolge besitzen auch die Stege dieser Querschnittsebene die gleiche geometrische Form. Man kann im übrigen die Form und Zahl der Schlitze in den aufeinanderfolgenden Querschnittsebenen der erfindungsgemäßen Federscheibenkupplung verändern, vorzugsweise ist jedoch die Form aller Schlitze aller Querschnittsebenen und somit auch die geometrische Form aller Stege gleich.

Die in einer Querschnittsebene angeordneten Schlitze besitzen vorzugsweise die gleiche Breite, bezogen auf die Längsachse des zylindrischen Körpers. Zweckmäßigerweise sind alle Schlitze aller Querschnittsebenen gleich breit.

Zweckmäßigerweise besitzen auch alle Federscheiben einer Kupplung die gleiche axiale Dicke, d.h. die gleiche auf die Längsachse des zylindrischen Körpers bezogene Dicke. Man kann die Breite der Schlitze so wählen, daß sie der Dicke der Federscheiben entspricht.

Die Stege bzw. die Mittellinie der Stege zweier axial benachbarter Querschnittsebenen sind vorzugsweise winkelversetzt; und zwar bei zwei Stegen pro Querschnittsebene vorzugsweise um 90° und bei drei Stegen pro Querschnittsebene vorzugsweise um 60°.

Man kann die erfindungsgemäße Federscheibenkupplung somit als einen Hohlzylinder auffassen, in dessen Wandung zwischen den axialen Endteilen mehrere bis in die Längsbohrung mündende Schlitze angeordnet sind.

Durch die Form der Stege, welche natürlich dann auch die Form der in dieser Querschnittsebene angebrachten Schlitze festlegt, kann man die Verdrehsteifigkeit der erfindungsgemäßen Federscheibenkupplung beeinflussen. Dadurch daß man den Stegen eine Pilzform verleiht, erhält man eine äußerst verdrehsteife Kupplung, bei der jedoch die Schlitze gleichwohl einen großen Volumenraum einnehmen, so daß die Masse der erfindungsgemäßen Kupplung gering ist.

Die erfindungsgemäße Federscheibenkupplung besitzt auch bei höchsten Belastungen eine hohe Formstabilität. Die erfindungsgemäße Federscheibenkupplung ist insbesondere zur Verbindung von zwei Wellen geeignet, welchen einen großen Versatz zueinander besitzen,

Erfindungsgemäß können mehrere Schlitze und Federscheiben zu einer größeren oder kleineren Anzahl von Federpaketen zusammengefaßt sein, entsprechend dem auszugleichenden Wellenversatz und dem zur Verfügung stehenden Platz.

Die Federscheiben sind zusammen mit den Stegen und den Endteilen vorzugsweise einstückig bzw. aus einem Stück gearbeitet, insbesondere aus Aluminium, so daß keinerlei Verbindungselemente notwendig sind.

Bei einer weiterhin bevorzugten Ausführungsform besitzt die erfindungsgemäße Federscheibenkupplung ein zylinderscheibenförmiges Mittelteil, an das sich beidseitig Schlitze und Federscheiben anschließen. Dieses Mittelteil besitzt zweckmäßigerweise den gleichen Außendurchmesser wie der Rest des zylindrischen Körpers und besitzt ebenfalls eine zur Längsachse koaxiale Bohrung, deren Durchmesser insbesondere dem Durchmesser der Längsbohrung im Bereich der Schlitze und Federscheiben entspricht.

Dieses Mittelteil kann aus einem Teil bestehen und mit dem Rest des zylindrischen Körpers einstückig sein.

Es kann aber auch aus zwei Scheibenelementen bestehen, die miteinander verbindbar sind, beispielsweise durch Verschrauben, Flanschen und auch durch Kleben.

In diesem Fall ist jedes Scheibenelement mit den sich daran anschließenden Federscheiben sowie dem Endteil vorzugsweise einstückig.

Auf diese Weise kann man ausgehend vom jeweiligen Scheibenelement bei der Herstellung eine axiale Längsbohrung anbringen, die bis zum Endteil reicht, jedoch einen größeren Innendurchmesser besitzt als die Bohrung im Endteil. Die Bohrung im Endteil kann man dann von der anderen Seite, d.h. von der Stirnfläche der Endseite eindrehen.

Durch Zusammensetzen der beiden Schelbenelemente erhält man dann die fertige Federscheibenkupplung.

Erfindungsgemäß stellt man die Federscheibenkupplung vorzugsweise aus einem zylindrischen Block her, wobei man zweckmäßigerweise zuerst die Längsbohrung anbringt. Anschließend schlitzt man den zylindrischen Körper zur Herstellung der Schlitze ein.

Dazu bedient man sich zweckmäßigerweise der Frästechnik, wobei man ein Fräsrad zum Einsatz bringt.

Zur Herstellung der Stege mit Pilzform kann man die Schlitze durch Tauchfräsen aus dem zylindrischen Körper ausnehmen. Man führt dazu ein entsprechend dimensioniertes Fräsrad radial quer zur Längsachse in den zylindrischen Körper ein, bis das Fräsrad die Längsbohrung erreicht hat. Nach Herausnehmen des Fräsrades dreht man den zylindrischen Körper um seine Längsachse um den gewünschten Winkel und wiederholt den Tauchfräsvorgang. Die Kontur und somit die Breite des Steges zwischen diesen beiden durch Tauchfräsen ausgenommenen Schlitzen hängt dann im wesentlichen vom Durchmesser des Fräsrades und davon ab, wieweit dieses Fräsrad in den zylindrischen Körper eingetaucht wurde.

Derartige Schlitze und derartige Stege kann man auch dadurch herstellen, daß man ein Fräsrad in Form einer Schwenkbewegung durch den zylindrischen Körper hindurchführt. Die Form des Schlitzes und somit auch der Stege hängt dann von der Länge des Schwenkarms ab. Natürlich beeinflußt auch die Eintauchtiefe die Kontur der Schlitze und der Stege. Durch gleichzeitiges oder aufeinanderfolgendes Eintauchen/Herausziehen und Schwenken des Fräsrades bzw. durch Drehen des zylindrischen Körpers kann man die gewünschte Form der Schlitze herausfräsen.

Die Erfindung wird im folgenden anhand der in den Figuren gezeigten bevorzugten Ausführungsformen näher erläutert. Von den Figuren zeigen:
- Fig. 1: eine Seitenansicht, teilweise als Schnitt, einer erfindungsgemäßen flexiblen Federscheibenkupplung;
- Fig. 2: eine Draufsicht auf ein Endteil der in der Fig. 1 gezeigten Federscheibenkupplung;
- Fig. 3: eine Ansicht der Federscheibenkupplung bei lateralem Versatz;
- Fig. 4: eine Ansicht bei axialem Versatz;
- Fig. 5: eine Ansicht bei angularem Versatz;
- Fig. 6: einen Querschnitt durch die in der Fig. 1 gezeigte Federscheibenkupplung entlang der Linie A-A;
- Fig. 7: einen der Fig. 6 entsprechenden Querschnitt einer weiteren Ausführungsform mit Stegen, die einen breiteren und "pilzförmigeren" Querschnitt besitzen; und
- Fig. 8: eine der Fig. 6 analoge Schnittansicht, wobei jedoch drei pilzförmige Stege vorhanden sind.

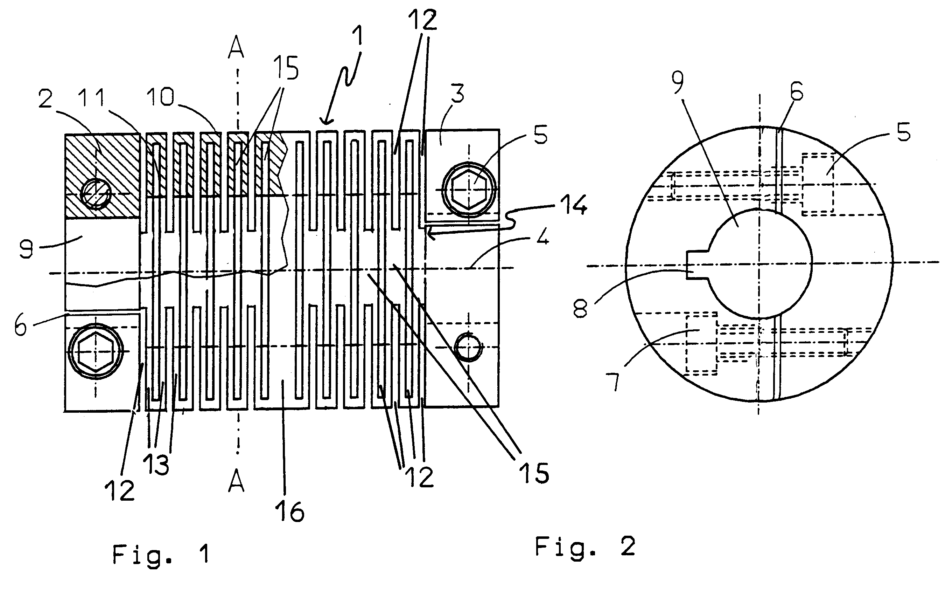

Die in der Fig. 1 gezeigte erfindungsgemäße Federscheibenkupplung besteht aus einem zylindrischen Körper 1 mit zwei Endteilen 2 und 3. Koaxial zur Längsachse 4 verläuft eine Längsbohrung 14.

Der zylindrische Körper besteht aus einem hinreichend festen homogenen Material, beispielsweise Stahl, Aluminium oder auch einem Kunststoff mit hinreichender Festigkeit.

Zwischen den beiden Endteilen 2,3 sind quer zur Längsachse 4 angeordnete Schlitze 12 angebracht, die über die Innenwand der Längsbohrung 14 sich hinaus bis fast zur Längsachse 4 erstrecken.

Die Schlitze 12 sind paarweise symmetrisch einander gegenüberliegend angeordnet. In der Fig. 1 sind im übrigen aus Gründen der Übersichtlichkeit nicht alle Schlitze mit der Bezugszahl 12 versehen.

Zwischen den zwei einander symmetrisch gegenüberliegenden Schlitzen 12 befinden sich zwei radial verlaufende Stege 15, die sich von der Mantelfläche 10 des zylindrischen Körpers 1 radial nach innen bis zur Längsbohrung 14 erstrecken.

Zwischen zwei axial hintereinanderliegenden Paaren von Schlitzen 12 befindet sich eine Federscheibe 13, die ebenfalls wie die Schlitze 12 quer zur Längsachse 4 angeordnet sind.

In der Querschnittsebene, in der sich zwei Schlitze 12 befinden, befinden sich somit auch zwei Stege 15. Die Querschnittsfläche der Schlitze 12 zusammen mit der Querschnittsfläche der Stege 15 macht die volle Querschnittskreisfläche des zylindrischen Körpers 1 aus.

Die Federscheiben 13 sind auf jeder Seite mittels eines Stegpaares mit den benachbarten Federscheiben 13 bzw. mit einem Endteil 2,3 verbunden.

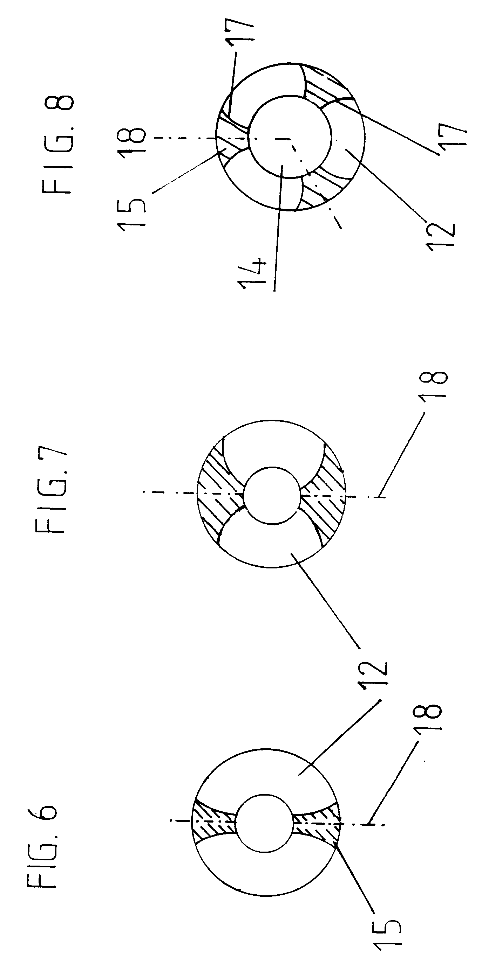

Der Querschnitt dieser Stege 15 ist in der Fig. 6 gezeigt. Die Querschnittsbreite der Stege 15 nimmt beginnend bei der Längsbohrung 14 bis zur Mantelfläche 10 des zylindrischen Körpers 1 kontinuierlich zu. Die Stege 15 sind bezüglich der Längsebene, die durch den zylindrischen Körper 1 und durch die Mittellinie 18 der Stege 15 verläuft, symmetrisch. Die Breite der Stege 15 ist an der Mantelfläche 10 am größten; sie sind in etwa pilzförmig.

Bei der in der Fig. 7 gezeigten Ausführungsform sind die Stege 15 noch pilzförmiger ausgestaltet als bei der in der Fig. 6 gezeigten Ausführungsform. Bei letzterer Ausführungsform ist die Flexibilität der Kupplung zwar etwas verringert, jedoch können noch größere Drehmomente als mit der vorherigen Ausführungsform übertragen werden.

Die Schlitze 13 bei den in den Fig. 6 und 7 gezeigten Ausführungsformen können durch Eintauchen und Schwenken eines entsprechend dimensionierten Fräsrades hergestellt werden.

Die Mittellinien 18 axial aufeinanderfolgender Stege 15 bzw. Stegpaare sind bei der in den Fig. 1 bis 8 gezeigten Ausführungsform um 90° zueinander versetzt. Mit anderen Worten, die Mittellinien axial beabstandeter Querschnittsebenen bilden einen Winkel von 90°.

Der Durchmesser der Längsbohrung 14 im Bereich der Schlitze 12 und Federscheiben 13 ist größer als der Durchmesser der Längsbohrung 9 in den Endteilen.

Die Endteile 2,3 können in beliebiger Weise zur Verbindung mit den Wellen ausgestaltet sein. Fig. 2 zeigt eine beispielhafte Ausführung in Form einer Klemmnabe mit der Längsbohrung 9 und zwei gegenüberliegenden Schlitzen 6, die mittels zweier Klemmschrauben 5,7 verspannt werden und damit die Nabe auf einer Welle befestigen. Die Bohrung 9 känn auch eine Nut 8 aufweisen, die zur Aufnahme einer Paßfeder bestimmt ist, die als zusätzliches Verbindungselement zur Welle dient.

Die Schlitze 6 sind parallel seitlich zum Durchmesser versetzt und zwar um einen Betrag, welcher ca. der halben Breite der Stege 15 an ihrer Mantelfläche 10 entspricht. Auf diese Weise können die Schlitze 6 in dem Bereich, in dem sich auch die Klemmschrauben 5,7 befinden, so weit in den zylindrischen Körper 1 eingeschnitten sein, daß sie in den an das dazugehörige Endteil 2,3 angrenzenden Schlitz 12 einmünden. Auf diese Weise wird die für die Funktion der Klemmschrauben 5,7 erforderliche Flexibilität sichergestellt.

Es ist auch möglich, die Endteile 2,3 mit radialen Gewindestiften, mit handelsüblichen Spannsätzen oder mit verschiedenen anderen Welle-Nabe-Verbindungen auszustatten.

Die zwischen den Endteilen angeordneten Schlitze 12 bzw. Federscheiben besitzen die gleiche axiale Breite bzw. Dicke. Dadurch ergibt sich ein gleichmäßiger Aufbau.

Die Schlitze 12 sind somit durch einen axialen Längsabstand voneinander getrennt, welcher "die Federscheibe 13" bildet. Die Dicke der Federscheiben 13 kann je nach Bedarfsfall gewählt werden, so daß die erfindungsgemäße Federscheibenkupplung mehr oder weniger flexibel ist und eine mehr oder weniger große Bauhöhe besitzt.

Die Federscheibenkupplung gemäß der Fig. 1 besitzt auch ein Mittelteil 16 in gleicher Rotationssymmetrie wie der zylindrische Körper 1. Dieses Mitteilteil 16 besitzt die gleiche Innenbohrung 14 und somit auch die gleiche Innenmantelfläche 11 wie der zylindrische Körper 1 im Bereich der Schlitze 12 und der Federscheiben 13.

Zwischen dem Mittelteil 16 und den beiden Endteilen 2,3 sind mehrere zu einem Federpaket zusammengefaßte Scheiben 12/Federscheiben 13 angeordnet.

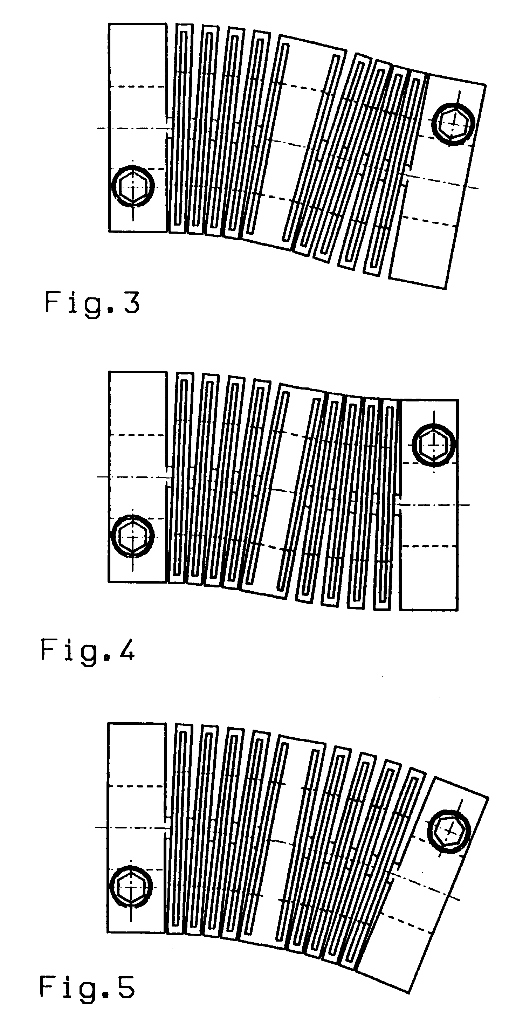

In den Fig. 3 bis 5 ist dargestellt, wie sich die Schlitze 12 bei verschiedener Belastung erweitern oder verengen und damit eine spielfreie Kraftübertragung bei nicht völlig axialer Ausrichtung der Wellen ermöglichen.

In der Fig. 8 ist eine weitere Ausführungsform der erfindungsgemäßen Federscheibenkupplung gezeigt. Diese Federscheibenkupplung besitzt drei Schlitze 12 pro Querschnittsebene und somit auch drei Stege 15.

Die Schlitze 12 sind gleichmäßig verteilt in einer Querschnittsebene angeordnet. Sie reichen alle bis zur Längsbohrung 14.

Zwischen den Schlitzen 12 befinden sich Stege 15, die sternförmig angeordnet sind, d.h. der zwischen den Mittellinien 18 dieser Stege eingeschlossene Winkel beträgt 120°.

Die Querschnittsbreite der Stege 15 nimmt beginnend bei der Längsbohrung 14 bis zur Mantelfläche 10 zu. Die Stege besitzen in etwa Pilzform.

Auch in diesem Fall ist der Querschnitt der Stege 15 bezüglich der dazugehörigen Mittellinie 18 symmetrisch. Die Mittellinien 18 axial benachbarter Querschnittsebenen sind um 60° winkelversetzt.

Die Begrenzungslinie 17 liegt auf einer Kreisbahn. Die dazugehörigen Schlitze 12 kann man durch Eintauchen eines entsprechend dimensionierten Fräsrades ausfräsen. Natürlich ist es auch möglich, die Schlitze 12 durch eine kombinierte Schwenk- und Tauchbewegung des Fräsrades sowie durch Drehen des zylindrischen Körpers 1 aus letzterem auszunehmen.

Durch den symmetrischen Aufbau der erfindungsgemäßen Federscheibenkupplung wird eine kompakte Konstruktion ermöglicht. Gleichwohl ist die Federscheibenkupplung in der Lage, Fehlausrichtungen beliebiger Art der zu verbindenden Wellen auszugleichen. Aufgrund des symmetrischen Aufbaus treten keine Unwuchten und somit keine Kräfte auf, welche insbesondere bei hohen Drehzahlen die Funktion beeinträchtigen könnten. Durch die Pilzform der zum Einsatz gebrachten Stege wird das polare Widerstandsmoment der erfindungsgemäßen Federscheibenkupplung wesentlich verstärkt.

Die Pilzform kann beliebig sein und kann entsprechend den gestellten Anforderungen gewählt sein.

## Patentansprüche

1. Federscheibenkupplung aus einem zylindrischen Körper (1), der an seinen beiden axialen Enden jeweils ein Endteil (2,3) und zwischen den beiden Endteilen (2,3) quer zur Längsachse (4) des Körpers (1) angeordnete und in axial beabstandeten Querschnittsebenen liegende Schlitze (12) besitzt und der zumindest im geschlitzten Bereich eine zu seiner Längsachse (4) koaxiale Längsbohrung (14) aufweist, in welche sich die Schlitze erstrecken, wobei mindestens zwei Schlitze (12) in einer Querschnittsebene angeordnet sind, wobei zwischen den Querschnittsebenen Federscheiben (13) ausgebildet sind, die miteinander bzw. mit den Endteilen (2,3) über eine der Zahl der Schlitze (12) pro Querschnittsebene entsprechende Anzahl von radial verlaufenden, in den jeweiligen Querschnittsebenen liegenden Stegen (15) verbunden sind, wobei die Winkel, die zwischen den radial verlaufenden Mittellinien (18) benachbarter Stege (15) einer Querschnittsebene eingeschlossen sind, gleich sind, und wobei die Breite der Stege (15) beginnend bei der Längsbohrung (14) bis zur Mantelfläche (10) des Körpers (1) zunimmt,
dadurch **gekennzeichnet**,
daß die Querschnittsform der Stege (15) in etwa eine Pilzform darstelllt, die zur radial verlaufenden Mittellinie (18) der Stege (15) symmetrisch ist und deren seitliche Begrenzungslinie (17) auf einer Kreisbahn liegt.

2. Federscheibenkupplung nach Anspruch 1,
dadurch **gekennzeichnet**,
daß die Stege (15) bzw. die Mittellinien (18) dieser Stege (15) axial benachbarter Querschnittsebenen gegeneinander winkelversetzt sind.

3. Federscheibenkupplung nach Anspruch 2,
dadurch **gekennzeichnet**,
daß die Stege (15) bzw. die Mittellinien (18) um 90°, falls zwei Stege (15) pro Querschnittsebene vorhanden sind, und im Falle von drei Stegen (15) pro Querschnittsebene, um 60° gegeneinander versetzt sind.

4. Federscheibenkupplung nach einem der Ansprüche 1 bis 3,
dadurch **gekennzeichnet**,
daß die Schlitze (12) einer Querschnittsebene und insbesondere aller Querschnittsebenen die gleiche axiale Breite und die gleiche geometrische Form besitzen.

5. Federscheibenkupplung nach einem der Ansprüche 1 bis 4,
dadurch **gekennzeichnet**,
daß alle Federscheiben (13) die gleiche axiale Dicke haben, welche insbesondere der axialen Breite der Schlitze (12) entspricht.

6. Federscheibenkupplung nach einem der vorhergehenden Ansprüche,
**gekennzeichnet** durch
ein zylinderscheibenförmiges Mittelteil (16), an das sich beidseitig Schlitze (12) und Federscheiben (13) abwechselnd anschließen und das insbesondere aus zwei miteinander verbindbaren Scheibenelementen besteht.

7. Federscheibenkupplung nach einem der vorhergehenden Ansprüche,
dadurch **gekennzeichnet**,
daß die Endteile (2,3) und/oder das Mittelteil (16) eine zur Längsachse (4) koaxiale Bohrung (9,19) besitzen, wobei der Durchmesser der Bohrung (19) im Mittelteil (16) insbesondere dem Durchmesser der Längsbohrung (14) im Bereich der Schlitze (12) und der Federscheiben (13) entspricht.

## Claims

1. A spring disc coupling composed of a cylindrical body (1) which is provided at both of its axial ends with a respective end portion (2,3) and between both of the end portions (2,3) with slots (12) lying in axially spaced cross-sectional planes and arranged transversely to the longitudinal axis (4) of the body (1), which is provided in at least the slotted region with a longitudinal bore (14) which is coaxial to its longitudinal axis (4) and into which extend the slots, whereby at least two slots (12) are arranged in one cross-sectional plane, whereby between the cross-sectional planes there are formed spring discs (13), which are connected to each other or to the end portions (2,3) by radially extending webs (15) lying in respective cross-sectional planes and corresponding in number to the number of slots per cross-sectional plane, whereby the angles which are included between the radially extending centrelines (18) of adjacent webs (15) of a cross-sectional plane are equal and, whereby the width of the webs (15) increases starting from the longitudinal bore (10) up to the peripheral surface of the body (1),
**characterized** in that,
the cross-sectional form of the webs (15) presents substantially a mushroom-shape which is symmetrical about the radially extending centreline (18) of the webs (15) and whose lateral boundary line (17) lies on a circular trajectory.

2. A spring disc coupling according to claim 1,
**characterized** in that,
the webs (15), or the centrelines (18) of these webs (15), of the axially adjacent cross-sectional planes are angularly displaced with respect to each other.

3. A spring disc coupling according to claim 2,
**characterized** in that,
in case there are two webs (15) per cross-sectional plane the webs (15) or the centrelines (18) are displaced angularly by 90° with respect to each other and, in the case of three webs (15) per cross-sectional plane by 60°.

4. A spring disc coupling according to one of the claims 1 to 3,
**characterized** in that,
the slots (12) of a cross-sectional plane and in particular of all cross-sectional planes have the the same axial width and the same geometrical shape.

5. A spring disc coupling according to one of the claims 1 to 4,
**characterized** in that,
all of the spring discs (13) have the same axial thickness which, in particular, corresponds to the axial width of the slots (12).

6. A spring disc coupling according to one of the preceding claims,
**characterized** by,
a cylindrical, annular central portion (16) which is adjoined bilaterally and alternately by slots (12) and discs (13) and which, in particular, consists of two annular elements which are connectable to each other.

7. A spring disc coupling according to one of the preceding claims,
**characterized** in that,
the end portions (2,3) and/or the central portion (16) have a bore (9,19) which is coaxial to the longitudinal axis (4), whereby the diameter of the bore (19) in the central portion (16) corresponds, in particular, to the diameter of the longitudinal bore (14) in the region of the slots (12) and spring discs (13).

## Revendications

1. Embrayage à disques élastiques comportant un corps cylindrique (1) qui possède sur chacune de ses deux extrémités axiales un élément d'extrémité (2, 3) et entre ces deux éléments d'extrémité (2, 3), des fentes (12) pratiquées transversalement à l'axe longitudinal (4) du corps (1) et situées dans des plans transversaux placés à une certaine distance axiale les uns des autres, ledit corps (1) présentant, au moins dans la zone des fentes, un perçage longitudinal (14) coaxial à son axe longitudinal (4) et dans lequel s'étendent lesdites fentes (12) dont au moins deux sont pratiquées dans un seul plan transversal, tandis qu'entre lesdits plans transversaux sont formés des disques élastiques (13) qui sont reliés entre et aux éléments d'extrémité (2, 3) par un nombre de traverses (15) qui correspond au nombre des fentes (12) à plan transversal, lesdites traverses (15) s'étendant radialement et étant situées dans les plans transversaux respectifs, les angles inclus entre les axes (18) s'étendant radialement des traverses (15) adjacentes d'un plan transversal étant égaux entre eux, tandis que la largeur desdites traverses (15) augmente en commençant par l'alésage longitudinal (14) et allant vers la face latérale (10) dudit corps (1), caractérisé en ce que la forme de la coupe transversale des traverses (15) représente approximativement celle d'un champignon qui est symétrique par rapport à l'axe radial (18) des traverses (15) et dont la ligne de délimitation latérale (17) se situe sur une circonférence.

2. Embrayage a disques élastiques selon la revendication 1, caractérisé en ce que les traverses (15) ou les axes (18) desdites traverses (15) de plans transversaux axialement adjacents présentent un décalage angulaire les unes par rapport aux autres.

3. Embrayage à disques élastiques selon la revendication 2, caractérisé en ce que les traverses (15) ou les axes (18), dans le cas de deux traverses (15) par plan transversal, et dans le cas de trois traverses (15) dans le plan transversal, présentent un décalage entre eux de 60°.

4. Embrayage a disques élastiques selon l'une des revendications 1 à 3, caractérisé en ce que les fentes (12) d'un plan transversal et, en particulier, de tous les plans transversaux, ont la même largeur axiale et la même forme géométrique.

5. Embrayage à disques élastiques selon l'une des revendications 1 à 4, caractérisé en ce que tous les disques élastiques (13) présentent la même épaisseur axiale qui correspond, en particulier, à la largeur axiale des fentes (12).

6. Embrayage à disques élastiques selon l'une des revendications précédentes, caractérisé par la présence d'un élément central (16) en forme de disque auquel se raccordent alternativement, des deux côtés, les fentes (12) et les disques élastiques (13) et qui est constitué, en particulier, par deux éléments en forme de disques pouvant être associés l'un avec l'autre.

7. Embrayage à disques élastiques selon l'une des revendications précédentes, caractérisé en ce que les éléments d'extrémité (2, 3) et/ou l'élément central (16) possèdent un perçage (9, 19) coaxial à l'axe longitudinal (4), le diamètre dudit perçage (19), dans l'élément central (16), correspondant en particulier au diamètre du perçage longitudinal (14) à proximité des fentes (12) et des disques élastiques (13).
